# FASCICULE DE BREVET EUROPEEN

(11) **EP 3 288 128 B1**
(45) Date de publication et mention de la délivrance du brevet: **14.07.2021**
(21) Numéro de dépôt: 17187482.9
(22) Date de dépôt: 23.08.2017
(51) Int. Cl.: H02G 1/00, H01R 43/26, H02G 1/14

(54) **MÉTHODE ET SYSTÈME POUR FACILITER LE PLACEMENT D'UNE PIÈCE À L'INTÉRIEUR D'UN CONNECTEUR ÉLECTRIQUE ET SON RETRAIT**
METHODE UND SYSTEM ZUM LEICHTEREN EINFÜHREN EINES TEILS IN EINEN ELEKTRISCHEN STECKER, UND SEINE ENTFERNUNG
METHOD AND SYSTEM FOR FACILITATING THE PLACEMENT OF A WORKPIECE INSIDE AN ELECTRICAL CONNECTOR AND THE REMOVAL THEREOF

(30) Priorité: 26.08.2016 BE 201605657
(43) Date de publication de la demande: 28.02.2018
(73) Titulaire: Ores Assets, 1348 Ottignies - Louvain-la-Neuve (BE)
(72) Inventeur: Bodson, Denis, 1348 Ottignies - Louvain-la-Neuve (BE)
(74) Mandataire: Gevers Patents

(56) Documents cités:
- CN-A- 105 024 315
- DE-A1- 4 301 878
- US-A- 3 649 952

## Description

### Domaine technique

Selon un premier aspect, l'invention se rapporte à une méthode de montage de dispositifs électriques de type connecteurs à haute tension utilisant ledit dispositif.

Selon un second aspect, l'invention se rapporte à une méthode de démontage de dispositifs électriques de type connecteurs à haute tension utilisant ledit dispositif.

Selon un troisième aspect, l'invention se rapporte à un dispositif pour l'intervention sur des dispositifs électriques de type connecteurs à haute tension.

### Etat de la technique

Le transport de l'électricité, de sa production à sa distribution, est généralement effectué au moyen de lignes haute tension (HT) et très haute tension (THT). L'électricité est généralement distribuée par l'intermédiaire d'un poste électrique. Le poste électrique permet l'abaissement de la tension des lignes HT et THT afin de distribuer l'électricité aux clients du réseau à des tensions électriques moins élevées.

Lors de la connexion de la ligne HT aux éléments du poste électrique, la prise en compte de l'isolation entre les phases est d'une grande importance. De ce fait, en fonction des contraintes de dimension du poste électrique, des connecteurs protégés par isolant permettent des distances entre phases plus petites que lorsque les connecteurs sont à l'air libre.

Un connecteur protégé par isolant également appelé connecteur en T ou connecteur est décrit dans WO 2013/004681 A2. Le connecteur comprend un corps isolant qui dispose de trois ouvertures qui communiquent. Dans une des ouvertures est inséré le câble d'arrivée, de préférence situé dans la partie inférieur du connecteur. Le câble d'arrivée est en général équipé d'un soulier de câble. Les deux ouvertures supérieures permettent l'accès au raccordement électrique du câble d'arrivée aux éléments du poste électrique. Une pièce à fiche conique permet le raccordement électrique d'un câble électrique à l'intérieur du connecteur afin d'assurer une bonne isolation entre les différentes phases. La pièce à fiche conique est insérée dans une des ouvertures supérieures du terminal. Un bouchon conique vient s'insérer dans la seconde ouverture supérieure du terminal. Le bouchon conique est vissé dans le terminal.

La pièce à fiche conique et le bouchon conique sont insérés dans les ouvertures supérieures du terminal en T de façon à isoler électriquement la connexion électrique entre le câble d'arrivée et l'élément à connecter du poste électrique des autres éléments. Afin de garantir une bonne isolation électrique, le contact entre le corps isolant du terminal avec la pièce à fiche conique et le bouchon conique ne doit pas contenir de poches d'air ou d'autre impureté qui pourrait nuire à la bonne isolation électrique. De ce fait, la pièce à fiche conique et le bouchon conique sont assemblés avec une grande justesse et requièrent un serrage.

Afin de faciliter le montage, le serrage et de garantir une bonne isolation électrique, une graisse silicone est généralement appliquée sur les surfaces du corps de terminal ainsi que sur la pièce à fiche conique et sur le bouchon conique.

Les principaux inconvénients de ce type de dispositif surviennent lors du démontage nécessaire lors de l'intervention par un opérateur. En effet, la graisse silicone peut perdre ses propriétés lubrificatrices et l'opérateur doit exercer une force élevée afin de parvenir à retirer le bouchon conique. Le démontage du bouchon conique cause parfois sa casse. Le démontage peut également endommager le corps isolant. Le démontage de la pièce à fiche conique est également difficile. Le démontage des différents éléments peut conduire à devoir les remplacer. Le montage des pièces dans le connecteur électrique peut également nécessiter à un opérateur l'application de forces relativement élevées pour y parvenir. L'intervention par un opérateur est ainsi coûteuse en matériel, en temps d'opération, en délai d'intervention et en indisponibilité pour le réseau.

Un premier dispositif pour retirer une pièce d'un terminal électrique ou connecteur est par exemple connu de US 3649 952 A. Le premier dispositif électrique à l'intérieur du connecteur afin d'assurer une bonne isolation entre les différentes phases. La pièce à fiche conique est insérée dans une des ouvertures supérieures du terminal. Un bouchon conique vient s'insérer dans la seconde ouverture supérieure du terminal. Le bouchon conique est vissé dans le terminal.

La pièce à fiche conique et le bouchon conique sont insérés dans les ouvertures supérieures du terminal en T de façon à isoler électriquement la connexion électrique entre le câble d'arrivée et l'élément à connecter du poste électrique des autres éléments. Afin de garantir une bonne isolation électrique, le contact entre le corps isolant du terminal avec la pièce à fiche conique et le bouchon conique ne doit pas contenir de poches d'air ou d'autre impureté qui pourrait nuire à la bonne isolation électrique. De ce fait, la pièce à fiche conique et le bouchon conique sont assemblés avec une grande justesse et requièrent un serrage.

Afin de faciliter le montage, le serrage et de garantir une bonne isolation électrique, une graisse silicone est généralement appliquée sur les surfaces du corps de terminal ainsi que sur la pièce à fiche conique et sur le bouchon conique.

Les principaux inconvénients de ce type de dispositif surviennent lors du démontage nécessaire lors de l'intervention par un opérateur. En effet, la graisse silicone peut perdre ses propriétés lubrificatrices et l'opérateur doit exercer une force élevée afin de parvenir à retirer le bouchon conique. Le démontage du bouchon conique cause parfois sa casse. Le démontage peut également endommager le corps isolant. Le démontage de la pièce à fiche conique est également difficile. Le démontage des différents éléments peut conduire à devoir les remplacer. Le montage des pièces dans le connecteur électrique peut également nécessiter à un opérateur l'application de forces relativement élevées pour y parvenir. L'intervention par un opérateur est ainsi coûteuse en matériel, en temps d'opération, en délai d'intervention et en indisponibilité pour le réseau.
Un premier dispositif pour retirer une pièce d'un terminal électrique ou connecteur est par exemple connu de US 3649 952 A. Le premier dispositif permet de séparer une pièce d'un connecteur électrique grâce à l'application d'une surpression. Une intervention sur un connecteur électrique avec un tel dispositif nécessite une étape de vissage sur le connecteur électrique.
Un deuxième dispositif pour faciliter le retrait d'une pièce d'un terminal en T est par exemple connu de DE 43 01 878 A1. Le deuxième dispositif permet de faire passer de l'air entre les parois du terminal en T et de la pièce suite à l'application d'une surpression, de sorte à faciliter le retrait de la pièce du terminal en T.
Un troisième dispositif pour faciliter le retrait d'une pièce d'un terminal en T est par exemple connu de CN 105024315 A. Le troisième dispositif permet grâce à l'application d'air comprimé, de permettre de créer un jeu entre la pièce à retirer et le terminal en T afin de faciliter le retrait de la pièce.

### Résumé de l'invention

Selon un premier aspect, les inventeurs proposent une méthode pour faciliter le placement d'une pièce à fiche conique selon la revendication 1.

De préférence, on peut induire une surpression dans la cavité du dispositif formant une connexion étanche entre une paroi externe d'une portion du connecteur électrique pour permettre l'écoulement d'un flux d'air comprimé à la jonction entre le connecteur et ladite pièce. De préférence, cet écoulement d'air permet un décollement entre une paroi interne de connecteur électrique et une pièce.

La méthode proposée pour faciliter le placement d'une pièce (par exemple un bouchon conique ou une pièce à fiche conique) à l'intérieur d'un connecteur électrique, permet l'intervention par un opérateur sur des connecteurs destinés à la connexion électrique de câbles HT. La méthode proposée permet grâce au passage d'un filet d'air entre les parties en contact, de conserver une bonne lubrification des pièces à placer dans le connecteur électrique. La méthode permet ainsi de faciliter à l'opérateur le placement du bouchon conique et ou de la pièce à fiche conique à l'intérieur d'un connecteur électrique. La méthode autorise une meilleure manipulation du bouchon conique et ou de la pièce à fiche conique lors de leurs montages dans le connecteur. La méthode facilite l'insertion de la pièce à fiche conique dans le connecteur par l'application d'une surpression pendant l'insertion de la pièce à fiche conique dans le connecteur. La méthode facilite le placement d'une pièce à l'intérieur d'un connecteur en ce que la force à exercer par un opérateur (par exemple la force appliqué lors du dévissage du bouchon conique du connecteur) est réduite et en ce que l'opération est rendue plus rapide. La méthode, en autorisant des efforts plus modérés permet de limiter les risques d'accidents et de rendre le travail moins restrictif en terme de capacité physique requises par l'opérateur.

Préférentiellement, la méthode pour faciliter le placement d'une pièce à l'intérieur d'un connecteur électrique comprend une étape additionnelle qui consiste à pousser la pièce dans le connecteur pendant l'application d'une surpression dans la cavité de la pièce évidée du dispositif.

Préférentiellement, la méthode pour faciliter le placement d'une pièce à l'intérieur d'un connecteur électrique comprend une étape additionnelle qui consiste à pousser la pièce dans le connecteur électrique après l'application d'une surpression dans ladite cavité de la pièce évidée du dispositif.

Préférentiellement, la surpression appliquée pour la méthode pour faciliter le placement d'une pièce à l'intérieur d'un connecteur électrique est comprise entre 1 x 10⁴ Pa et 6 x 10⁵ Pa.

Préférentiellement, la surpression appliquée pour la méthode pour faciliter le placement d'une pièce à l'intérieur d'un connecteur électrique est comprise entre 1 x 10⁵ Pa et 3 x 10⁵ Pa.

Préférentiellement, la surpression appliquée pour la méthode pour faciliter le placement d'une pièce à l'intérieur d'un connecteur électrique est comprise entre 1,4 x 10⁵ Pa et 2,1 x 10⁵ Pa. Par exemple, une pression comprise dans une telle plage de pression ainsi que dans les plages de pression précédemment évoquées et évoquées dans le deuxième aspect de l'invention, permet un écoulement d'air entre une pièce et une paroi interne du connecteur. Cette plage de pression relativement basse par rapport à ce qu'un homme du métier pourrait anticiper apporte un abaissement considérable des efforts d'un opérateur pour le placement d'une pièce et//ou son retrait d'un connecteur électrique. La plage de pression utilisée par l'invention est relativement basse grâce aux caractéristiques structurelles de la pièce évidée du dispositif. Caractéristiques structurelles qui permettent un positionnement facile du dispositif sur un connecteur électrique ainsi que d'assurer une connexion étanche entre la pièce évidée et une paroi externe du connecteur lors de l'application d'air comprimé. La connexion étanche est de préférence également assurée par le maintien du dispositif par l'opérateur ainsi que par l'écoulement de l'air à la jonction de la pièce et du connecteur électrique qui provoque un léger gonflement de la paroi externe du connecteur dans la pièce évidée du dispositif assurant ainsi une étanchéité suffisante pour l'application d'une pression dans l'une des plages susdites.

Préférentiellement, la méthode pour faciliter le placement d'une pièce à l'intérieur d'un connecteur électrique comprend une étape additionnelle qui consiste à appliquer de la graisse à l'intérieur d'un connecteur à un emplacement destiné à recevoir la pièce avant d'insérer la pièce dans le connecteur.

Préférentiellement, la méthode pour faciliter le placement d'une pièce à l'intérieur d'un connecteur électrique comprend une étape additionnelle qui consiste à déposer de la graisse sur une surface conique de la pièce avant d'insérer la pièce dans le connecteur.

Préférentiellement, la méthode pour faciliter le placement d'une pièce à l'intérieur d'un connecteur électrique permet de faciliter le placement d'une pièce à fiche conique apte à être connectée électriquement à un poste électrique.

Préférentiellement, la méthode pour faciliter le placement d'une pièce à l'intérieur d'un connecteur électrique permet de faciliter le placement d'un bouchon conique qui dispose d'une interface pour interagir avec un outil de serrage.

Préférentiellement, le bouchon conique est vissé dans le connecteur électrique après son insertion (dans le connecteur électrique).

Selon un deuxième aspect, les inventeurs proposent une méthode pour faciliter le retrait d'une pièce (bouchon conique, pièce à fiche conique ou parties de ces éléments par exemple) de l'intérieur d'un connecteur selon la revendication 6.

Les variantes et avantages mentionnés pour le premier aspect de l'invention s'appliquent à la méthode suivant le deuxième aspect, mutadis mutandis.

De préférence, on peut induire une décollement entre une paroi interne de connecteur électrique et une pièce en appliquant une surpression dans la cavité du dispositif formant une connexion étanche entre une paroi externe d'une portion du connecteur électrique pour permettre l'écoulement d'un flux d'air comprimé à la jonction entre le connecteur et ladite pièce.

La méthode proposée pour faciliter le retrait d'une pièce (par exemple un bouchon conique ou une pièce à fiche conique) de l'intérieur d'un connecteur électrique, permet l'intervention par un opérateur sur des connecteurs destinés à la connexion électrique de câbles HT. La méthode proposée permet de décoller les parties qui seraient collées grâce au passage d'un filet d'air entre les parties en contact. La méthode permet ainsi de faciliter à l'opérateur le retrait du bouchon conique et de la pièce à fiche conique de l'intérieur d'un connecteur électrique. La méthode autorise une meilleure manipulation du bouchon conique et de la pièce à fiche conique lors de leur démontage du connecteur. La méthode rend plus aisé le retrait du bouchon conique du connecteur grâce à la surpression que la méthode permet d'appliquer afin de faciliter le glissement entre le bouchon conique et le connecteur. Plus remarquablement, la méthode permet le desserrage puis le retrait du bouchon conique sans casse du bouchon conique ou endommagement du connecteur, et ce, notamment lorsque le bouchon ne présente plus une lubrification suffisante avec le connecteur (par exemple lorsque le bouchon est collé au connecteur). La méthode rend également plus facile la séparation du connecteur et de la pièce à fiche conique en appliquant une surpression pendant leur retrait l'un de l'autre. La méthode facilite le retrait d'une pièce de l'intérieur d'un connecteur en ce que la force à exercer par un opérateur (par exemple la force appliquée lors du dévissage du bouchon conique du connecteur) est réduite et en ce que l'opération est rendue plus rapide. La méthode, en autorisant des efforts plus modérés de la part d'un opérateur sur le connecteur, permet la conservation du bouchon conique et de la pièce à fiche conique lors d'une intervention. La méthode, en autorisant des efforts plus modérés permet de limiter les risques d'accidents et de rendre le travail moins restrictif en terme de capacité physique requises par l'opérateur. La méthode permet de réduire le temps d'indisponibilité du réseau ainsi que les coûts associés au remplacement d'éléments détériorés par un démontage sans l'utilisation de la méthode.

Préférentiellement, la surpression appliquée pour la méthode pour faciliter le retrait d'une pièce de l'intérieur d'un connecteur électrique est comprise entre 1 x 10⁴ Pa et 6 x 10⁵ Pa.

Préférentiellement, la surpression appliquée pour la méthode pour faciliter le retrait d'une pièce de l'intérieur d'un connecteur électrique est comprise entre 1 x 10⁵ Pa et 3 x 10⁵ Pa.

Préférentiellement, la surpression appliquée pour la méthode pour faciliter le retrait d'une pièce de l'intérieur d'un connecteur électrique est comprise entre 1,4 x 10⁵ Pa et 2,1 x 10⁵ Pa.

Préférentiellement, la méthode pour faciliter le retrait d'une pièce de l'intérieur d'un connecteur électrique comprend une étape additionnelle qui consiste à appliquer une surpression additionnelle préférentiellement comprise entre 1 x 10⁴ Pa et 6 x 10⁵ Pa, plus préférentiellement comprise entre 1 x 10⁵ Pa et 3 x 10⁵ Pa et est de préférence comprise entre 1,4 x 10⁵ Pa et 2,1 x 10⁵ Pa après l'application de la première surpression.

Préférentiellement, la méthode pour faciliter le retrait d'une pièce de l'intérieur d'un connecteur électrique permet de faciliter le retrait d'un bouchon conique qui dispose d'une interface pour interagir avec un outil de serrage.

Préférentiellement, la méthode pour faciliter le retrait d'une pièce de l'intérieur d'un connecteur électrique comprend un dépôt de graisse autour du bouchon conique avant l'application d'une surpression dans la cavité.

Préférentiellement, la méthode pour faciliter le retrait d'un bouchon conique d'un connecteur comprend de dévisser le bouchon conique du connecteur électrique après l'application de la surpression dans ladite cavité.

Préférentiellement, la méthode pour faciliter le retrait d'un bouchon conique d'un connecteur comprend l'extraction du bouchon conique du connecteur électrique après le dévissage du bouchon conique.

Préférentiellement, la méthode pour faciliter le retrait d'une pièce de l'intérieur d'un connecteur électrique permet de faciliter le retrait d'une pièce à fiche conique qui est connectée électriquement et mécaniquement à un poste électrique.

Préférentiellement, la méthode pour faciliter le retrait d'une pièce à fiche conique du connecteur comprend une étape qui consiste à retirer la pièce à fiche conique pendant l'application d'une surpression dans la cavité.

Selon un troisième aspect, les inventeurs proposent un système pour le placement d'une pièce à l'intérieur d'un connecteur électrique et son retrait selon la revendication 14.

Les variantes et avantages mentionnés pour les premier et second aspects de l'invention s'appliquent au système suivant le troisième aspect, mutadis mutandis.

De préférence, une surpression d'air comprimé dans ladite cavité engendre l'écoulement d'un flux d'air comprimé à la jonction entre ledit connecteur et ladite pièce pour permettre un décollement entre une paroi interne de connecteur électrique et une pièce.

Le système proposé permet l'intervention par un opérateur sur des connecteurs destinés à la connexion électrique de câbles HT. Le dispositif permet de retrouver une réduction des frottements (décollement) entre le bouchon conique, la pièce à fiche conique et le connecteur électrique. Le dispositif permet de décoller les parties qui seraient collées grâce au passage d'un filet d'air entre les parties en contact. Le dispositif permet ainsi de faciliter à l'opérateur le placement du bouchon conique et de la pièce à fiche conique à l'intérieur d'un connecteur électrique et son retrait. Le dispositif autorise une meilleure manipulation du bouchon conique et de la pièce à fiche conique lors de leurs montage dans le connecteur et démontage. Le dispositif rend plus aisé le desserrage du bouchon conique dans le connecteur grâce à la surpression qu'il permet d'appliquer afin de restaurer la lubrification entre le bouchon conique et le connecteur. Plus remarquablement, le dispositif permet le desserrage puis le retrait du bouchon conique sans casse du bouchon conique ou endommagement du connecteur, et ce, notamment lorsque le bouchon ne présente plus une lubrification suffisante avec le connecteur. Le dispositif permet de faciliter l'insertion de la pièce à fiche conique dans le connecteur par l'application d'une surpression pendant l'insertion de la pièce à fiche conique dans le connecteur. Le dispositif rend également plus facile la séparation du connecteur et de la pièce à fiche conique en appliquant une surpression pendant leur retrait l'un de l'autre. Le dispositif facilite le placement et le retrait d'une pièce à l'intérieur d'un connecteur en ce que la force à exercer par un opérateur (par exemple la force appliquée lors du dévissage du bouchon conique du connecteur) est réduite et en ce que l'opération est rendue plus rapide. Le dispositif, en autorisant des efforts plus modérés de la part d'un opérateur sur le connecteur, permet la conservation du bouchon conique et de la pièce à fiche conique lors d'une intervention. Le dispositif, en autorisant des efforts plus modérés permet de limiter les risques d'accidents et de rendre le travail moins restrictif en terme de capacité physique requises par l'opérateur.

Un avantage du système et des méthodes de l'invention est de permettre ou de faciliter le placement et le retrait d'une pièce d'un terminal électrique. Le dispositif de l'invention permet d'intervenir sur différents types de connecteur et pas uniquement sur un type de connecteur spécifique. Un autre avantage du dispositif de l'invention est de faciliter le placement et le retrait d'une pièce d'un terminal électrique sans nécessiter une ou des étapes de vissage ou de serrage du dispositif de l'invention au connecteur ou à la pièce à retirer. Cela est particulièrement avantageux lorsqu'il s'agit de travailler dans des espaces confinés.

On peut définir un plan qui est déterminé par l'ouverture de la cavité de la pièce évidée.

De préférence, la connexion créée entre la paroi interne latérale et la paroi externe de la portion du connecteur électrique est étanche à l'air.

Préférentiellement, la cavité du dispositif a une section ellipsoïdale dans un plan essentiellement parallèle à ladite ouverture.

Préférentiellement, la cavité du dispositif a une section circulaire dans un plan essentiellement parallèle à ladite ouverture.

Préférentiellement, la cavité du dispositif a des dimensions variables entre ladite paroi interne percée et ladite ouverture dans des plans essentiellement parallèles à ladite ouverture.
Dans ce mode de réalisation, le dispositif peut être adapté à des connecteurs ayant des dimensions de portions variables. Le dispositif est adapté a des dimensions de portion de connecteur variables en insérant plus ou moins le dispositif autour de la portion du connecteur.

Préférentiellement, la cavité du dispositif présente une extension au niveau de la paroi interne percée qui est inférieure à celle au niveau de l'ouverture, dans des plans essentiellement parallèles à ladite ouverture.

Préférentiellement, l'extension de la cavité du dispositif, dans des plans essentiellement parallèles à l'ouverture de la cavité présente une variation linéaire entre la paroi interne percée et l'ouverture.

La paroi interne latérale de la pièce évidée du dispositif a la forme d'un cône dont l'angle de cône est compris entre 2.5° et 15°. Un angle de cône compris entre 2.5° et 15° permet une bonne connexion fluidique entre la paroi interne latérale et la paroi externe de la portion du connecteur électrique. Un angle de cône inférieur à 2.5° est trop fermé et ne permet pas une bonne connexion fluidique entre la paroi interne latérale du dispositif et la portion du connecteur électrique car la matière de la portion du connecteur ne se comprime pas sur la paroi interne latérale du dispositif. Un angle de cône inférieur à 2.5° ne favorise pas le passage d'air entre une pièce et le connecteur électrique. Un angle supérieur à 15° est trop ouvert et n'offre pas une accroche suffisante entre la paroi interne latérale du dispositif et la portion du connecteur électrique ne favorisant pas le passage d'un film d'air entre une pièce et le connecteur électrique. Un angle supérieur à 15° provoque un effet de recul systématique lors de l'utilisation du dispositif tel que décrit dans les méthodes de montage et de démontage.

Préférentiellement, la paroi interne latérale délimitant latéralement la cavité de la pièce évidée du dispositif est comprise entre la paroi interne percée et l'ouverture.

Préférentiellement, la paroi interne latérale de la pièce évidée du dispositif est striée. Les stries situées sur la paroi interne latérale permettent une meilleur connexion fluidique entre la paroi interne latérale et la paroi externe de la portion du connecteur électrique.

Préférentiellement, la paroi interne latérale de la pièce évidée du dispositif est striée avec un pas compris entre 0.15 mm et 0.30 mm.

Préférentiellement, la paroi interne latérale de la pièce évidée du dispositif est striée avec une profondeur de sillon comprise entre 0.05 mm et 0.5 mm.

Préférentiellement, le moyen de connexion entre le contrôleur de flux d'air comprimé et la pièce évidée comprend un connecteur rapide. Le connecteur rapide permet une manipulation plus aisée du dispositif et de sa maintenance tout en rendant la connexion mécaniquement souple.

Préférentiellement, le contrôleur de flux d'air comprimé est relié de manière fluidique à la connexion fluidique par un connecteur rapide. Le connecteur rapide entre le contrôleur de flux d'air comprimé et la connexion fluidique permet un remplacement facilité de la source d'air comprimé.

Par exemple, la paroi externe du connecteur électrique est écranté.

Par exemple, la paroi externe du connecteur électrique est non-écranté.

Préférentiellement, toute matière peut convenir pour la conception de la pièce évidée. Par exemple, toute matière plastique peut être utilisée pour la fabrication de la pièce évidée. Par exemple, la pièce évidée du dispositif est en Polyoxyméthylène (POM). Par exemple, la pièce évidée du dispositif est en Ertacetal®.

Préférentiellement, la pièce évidée du dispositif est rigide pour conserver essentiellement des propriétés de dimensions au repos de ladite pièce évidée lors de l'utilisation dudit dispositif. Le contact de la pièce évidée qui est rigide avec la paroi souple du connecteur électrique permet une bonne connexion fluidique entre ces deux éléments.

Le bouchon conique peut également être désigné comme bouchon, connecteur conique ou encore pièce.

La pièce à fiche conique peut également être désignée comme une pièce ou encore une pièce à fiche.

### Brève description des figures

Ces aspects ainsi que d'autres aspects de l'invention seront clarifiés dans la description détaillée de modes de réalisation particuliers de l'invention, référence étant faite aux dessins des figures, dans lesquelles :
- la Fig.1 montre un mode de réalisation du dispositif selon l'invention ;
- la Fig.2 montre un mode de réalisation du dispositif et de la méthode pour faciliter le placement d'une pièce à l'intérieur d'un connecteur électrique selon l'invention ;
- la Fig.3 montre un mode de réalisation du dispositif et de la méthode pour faciliter le retrait d'une pièce de l'intérieur d'un connecteur électrique selon l'invention ;
- la Fig.4 montre une vue rapproché de la pièce évidée comprise dans le dispositif selon l'invention ;
- la Fig.5 montre une vue rapproché de la pièce évidée comprise dans le dispositif selon l'invention ;
Les dessins des figures ne sont pas à l'échelle. Généralement, des éléments semblables sont dénotés par des références semblables dans les figures. La présence de numéros de référence aux dessins ne peut être considérée comme limitative, y compris lorsque ces numéros sont indiqués dans les revendications.

### Description détaillée de certains modes de réalisation de l'invention

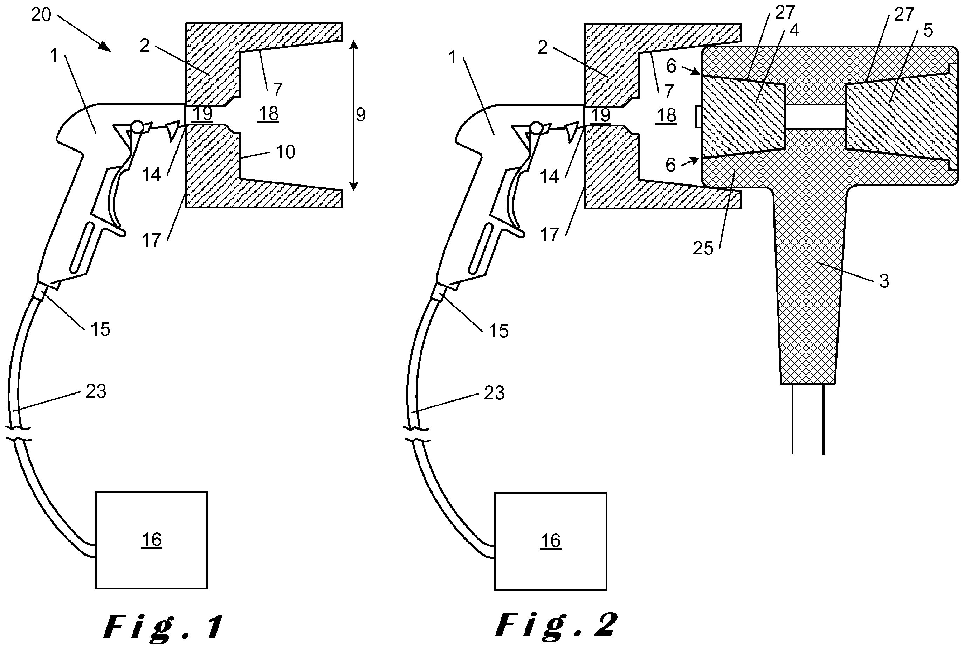

La figure 1 montre un exemple de mode de réalisation du dispositif 20 selon l'invention. Le dispositif 20 comprend une source d'air comprimé 16 qui est par exemple un compresseur à air comprimé. De préférence, la source d'air comprimé est une cartouche de gaz comprimé La source d'air comprimé 16 est couplée de manière fluidique à un contrôleur de flux d'air comprimé 1 par l'intermédiaire d'une connexion fluidique 23. La connexion fluidique 23 est par exemple connectée de manière fluidique au contrôleur de flux d'air comprimé 1 par l'intermédiaire d'une connexion fluidique rapide 15. La connexion fluidique 23 est par exemple un tuyau. Le contrôleur de flux d'air comprimé 1 est connecté de manière fluidique et mécanique à la pièce évidée 2. La manipulation de la pièce évidée 2 peut se faire uniquement par l'intermédiaire du contrôleur de flux d'air comprimé 1. Un moyen de connexion 14 permet de relier de manière fluidique le contrôleur de flux d'air comprimé 1 et la cavité 18 via l'orifice 19. Le contrôleur de flux d'air comprimé 1 est de préférence connecté à la pièce évidée 2 de manière fluidique et mécanique par l'intermédiaire d'un élément de connexion 14. L'élément de connexion 14 entre le contrôleur de flux d'air comprimé 1 et la pièce évidée 2 peut être un connecteur fluidique rapide. La pièce évidée 2 comprend un orifice 19 débouchant sur la cavité 18. La pièce évidée 2 comprend une cavité 18 dont le centre est de préférence alignée avec le centre de l'orifice 19. L'orifice 19 est traversant entre la paroi arrière externe percée 17 et la paroi interne percée 10 pour amener de l'air dans ladite cavité 18. L'orifice 19 permet une connexion fluidique entre le contrôleur de flux d'air comprimé 1 et la cavité 18 de la pièce évidée 2. La cavité 18 débouche sur une ouverture 9. On peut définir un plan déterminé par ladite ouverture 9. L'ouverture 9 de la cavité 18 peut également être définie telle qu'elle peut décrire un plan. La cavité 18 de la pièce évidée 2 est limitée du côté opposé à l'ouverture 9 par une paroi interne percée 10. La cavité 18 est limitée latéralement entre l'ouverture 9 et la paroi interne percée 10 par une paroi interne latérale 7. La pièce évidée 2 comprend une paroi arrière externe percée 17 opposée à l'ouverture 9.

La pièce évidée 2 est de préférence rigide, c'est-à-dire qu'elle est apte à conserver ses propriétés de dimension lorsque le dispositif 20 est en utilisation et lorsqu'il est au repos. Le contrôleur de flux d'air comprimé 1 permet par l'action de l'opérateur de délivrer une quantité d'air comprimé dans la cavité 18 grâce à la connexion fluidique établie avec le moyen de connexion 14 et l'orifice 19.

La figure 2 montre un exemple du mode de réalisation du dispositif 20 selon l'invention. Le dispositif 20 comprend dans la cavité 18 une paroi interne latérale 7 à la cavité 18. La paroi interne latérale 7 à la cavité 18 permet de recevoir une portion 25 du connecteur 3 électrique. Le positionnement du dispositif 20 sur le connecteur 3 électrique est par exemple effectué en positionnant la cavité 18 autour de la portion 25 du connecteur 3 électrique. Le positionnement du dispositif 20 autour de la portion 25 du connecteur 3 électrique se fait de préférence en mettant en contact la portion 25 du connecteur 3 électrique avec la paroi interne latérale 7 de la cavité 18. De préférence, le positionnement du dispositif 20 autour de la portion 25 du connecteur 3 électrique permet une connexion fluidique entre la cavité 18 et la portion 25 du connecteur 3 électrique.

Lorsque le dispositif 20 est positionné autour de la portion 25 du connecteur 3 électrique de façon à être connecté de manière fluidique, l'opérateur peut en actionnant le contrôleur de flux d'air comprimé 1, imposer une surpression dans la cavité 18 par rapport à la pression initiale. Cette surpression permet de faire passer de l'air entre le connecteur 3 électrique et le bouchon 4 conique. Le bouchon 4 conique peut également être désigné comme bouchon, connecteur conique ou encore pièce. Le passage d'air est rendu possible grâce à la relative souplesse du connecteur 3 électrique qui se déforme au passage du flux d'air. Le dispositif 20 permet ainsi de désolidariser le bouchon 4 conique du connecteur 3 électrique lorsque le bouchon 4 conique est par exemple bloqué. Le bouchon 4 conique peut se bloquer dans le connecteur 3 électrique lorsque le bouchon 4 conique a été introduit dans le connecteur 3 électrique par exemple depuis au moins un jour. Le blocage du bouchon 4 conique peut être dû par exemple au collage entre le bouchon 4 conique et le connecteur 3 électrique.
Le dispositif 20 permet de recevoir par exemple une portion 25 du connecteur 3 électrique dans la cavité 18.

La figure 2 montre un exemple de mise en situation telle que décrite par la méthode pour faciliter le retrait selon l'invention. L'utilisation du dispositif 20 permet de faciliter le retrait du bouchon 4 conique qui est alors inséré dans le connecteur 3 électrique tel que montré dans l'exemple de réalisation décrit dans la figure 2. La pièce évidée 2 est configurée pour recevoir dans la cavité 18 une portion 25 du connecteur 3 électrique via l'ouverture 9. La cavité 18 de la pièce évidée 2 forme entre la paroi interne latérale 7 et la paroi externe 24 de ladite portion 25 une connexion étanche. La connexion créée entre la paroi interne latérale 7 et la paroi externe 24 de la portion 25 du connecteur électrique est étanche à l'air. Dans cet exemple de réalisation, le connecteur 3 électrique et le dispositif 20 sont placés en contact afin de former un contact fluidique entre la paroi interne latérale 7 de la cavité 18 de la pièce évidée 2 du dispositif 20 et la portion 25 du connecteur 3 électrique. Ainsi positionné, le dispositif 20 permet de faciliter le démontage du bouchon 4 conique par l'actionnement du contrôleur de flux d'air comprimé 1 par un opérateur. L'actionnement du contrôleur de flux d'air comprimé 1 permet de créer une surpression dans la cavité 18 ainsi obstruée par la portion 25 du connecteur 3 électrique ainsi que par le bouchon 4 conique. La surpression dans la cavité 18 ainsi obstruée cause le passage de l'air et par exemple d'un filet d'air entre le bouchon 4 conique et le connecteur 3 électrique. De préférence l'air s'écoule entre le bouchon 4 conique ou la pièce à fiche conique 5 et une paroi interne 27 du connecteur 3 électrique. Le passage de l'air entre le bouchon 4 conique ou la pièce à fiche conique 5 et le connecteur 3 électrique permet de décoller ces deux parties qui avec le temps deviennent de plus en plus difficile à démonter. Lors du montage de la pièce à fiche conique 5 dans le connecteur 3 électrique, un écoulement d'air permet d'éviter que les parois en contact de la pièce à fiche conique 5 et de la paroi interne 27 du connecteur 3 électrique ne présente une trop grande adhérence. Grâce à cet écoulement d'air le montage du connecteur 3 électrique sur une pièce à fiche conique est plus aisé. Par exemple lors du montage, un opérateur tient dans une main le dispositif de l'invention et dans une autre le connecteur électrique ; pendant l'application d'air comprimé ou après l'application d'air comprimé, l'opérateur exerce une force pour permettre un bon positionnement de la pièce à fiche conique 5 dans le connecteur électrique 3.

L'utilisation par l'homme du métier d'un lubrifiant, de préférence une graisse et plus préférablement une graisse silicone permet une bonne lubrification lors du montage. Cependant les propriétés de lubrification préférentiellement de la graisse silicone s'altèrent rapidement avec le temps. Le passage de l'air permet ainsi de renouveler le pouvoir lubrifiant de la graisse silicone par exemple. Ainsi, après avoir actionné le dispositif 20 de telle sorte à redonner un caractère lubrifiant à la graisse silicone par exemple, l'opérateur peut dévisser le bouchon 4 conique en utilisant un outil adapté à cet effet via l'interface du bouchon conique pour interagir avec un outil de serrage. L'opérateur peut recourir à plusieurs mise en place du dispositif 20 autour de la portion 25 du connecteur 3 électrique afin de redonner un caractère lubrifiant à la graisse silicone par exemple et ce lors d'une même opération de démontage, lors d'opérations de démontage successives ou lors d'opérations de démontages étalées sur des durées plus longues, de l'ordre de quelques jours à plusieurs années.

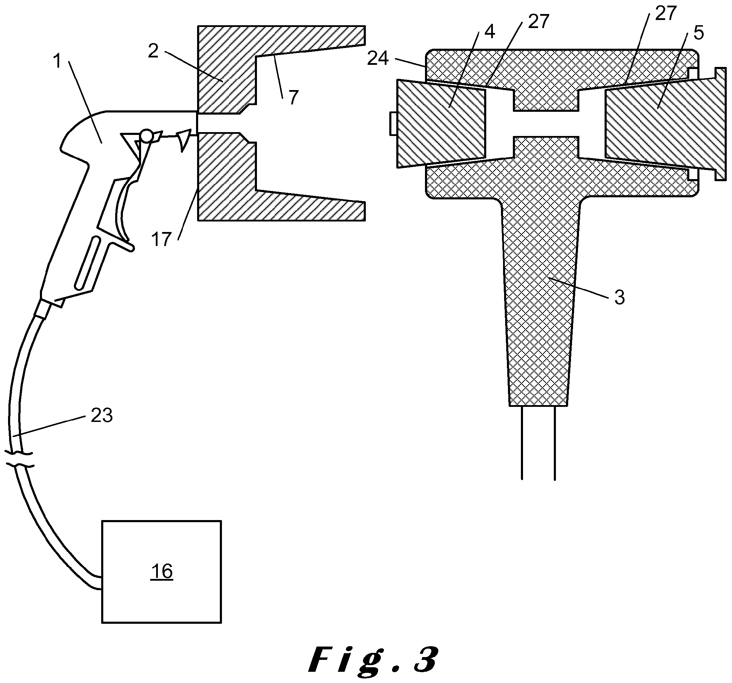

La figure 3 montre un exemple de mise en situation telle que décrite par la méthode de montage selon l'invention. L'utilisation du dispositif 20 permet de faciliter le montage de la pièce à fiche 5 conique et du bouchon 4 conique dans les ouvertures supérieures du connecteur 3 électrique prévues. La pièce à fiche 5 conique peut également être désignée comme une pièce ou encore une pièce à fiche. Le montage de la pièce à fiche conique 5 est effectué en positionnant le dispositif 20 autour de la portion 25 du connecteur 3 électrique de telle sorte que le bouchon conique n'est pas inséré. Le positionnement de la pièce à fiche 5 conique dans le connecteur 3 électrique peut alors se faire par l'exercice d'une force opposée entre la pièce à fiche 5 conique et le connecteur 3 électrique. Pendant l'exercice de cette force, l'opérateur peut contrôler le flux d'air fournit par le dispositif en actionnant le contrôleur de flux d'air comprimé 1 selon une séquence ou un flux d'air continu qui conviendra le mieux. Durant cette opération, l'opérateur veillera à ce que la connexion fluidique est bien réalisée entre le dispositif 20 et la portion 25 du connecteur 3 électrique lorsque le contrôleur de flux d'air 1 comprimé est actionné. L'utilisation du dispositif 20 permet également de faciliter le montage du bouchon conique 4 dans le connecteur 3 électrique. En effet, le bouchon 4 conique qui est inséré dans le connecteur 3 électrique puis qui est vissé dans celui-ci peut devenir trop difficile à visser. Ainsi, l'utilisation du dispositif 20 entre deux phases de vissage du bouchon 4 conique dans le connecteur 3 électrique permet de réduire le couple nécessaire pour visser le bouchon 4 conique.

L'utilisation du dispositif 20 pour faciliter le montage et le démontage du bouchon 4 conique dans et du connecteur 3 électrique peut être associé au dépôt d'un lubrifiant, de préférence une graisse silicone sur les parois intérieures du connecteur 3 électrique et du bouchon conique 4. Ce dépôt de lubrifiant peut être réalisé avant le montage ou bien pendant le montage en apposant du lubrifiant à la jonction entre le bouchon conique 4 et le connecteur 3 électrique. Le lubrifiant peut également être appliqué à la jonction 6 entre le bouchon conique 4 et le connecteur 3 électrique lors du démontage. Le lubrifiant disposé à la jonction 6 entre le bouchon conique et le connecteur 3 électrique, lors de l'utilisation du dispositif 20 sera propagé sous l'action de l'air sur les parois du bouchon conique 4 et du connecteur 3 électrique qui sont en contact. Par l'ajout de lubrifiant entre les parois du bouchon conique 4 et du connecteur 3 électrique, le démontage du bouchon conique 4 et du connecteur 3 électrique est rendu plus aisé. Par l'ajout de lubrifiant entre les parois du bouchon conique 4 et du connecteur 3 électrique, le montage du bouchon conique 4 et du connecteur est rendu plus aisé.

La cavité 18 du dispositif 20 à une section qui est de préférence ellipsoïdale et plus préférentiellement cylindrique afin de correspondre au mieux à la section de la portion 25 du connecteur 3 électrique. La correspondance de la section de la cavité 18 du dispositif 20 avec la section de la portion 25 du connecteur 3 électrique permet une meilleure connexion fluidique. La cavité 18 du dispositif 20 dispose préférentiellement d'une section circulaire dont le diamètre varie entre la paroi avant 11 de la pièce évidée et la paroi interne percée 10 de la pièce évidée 2.

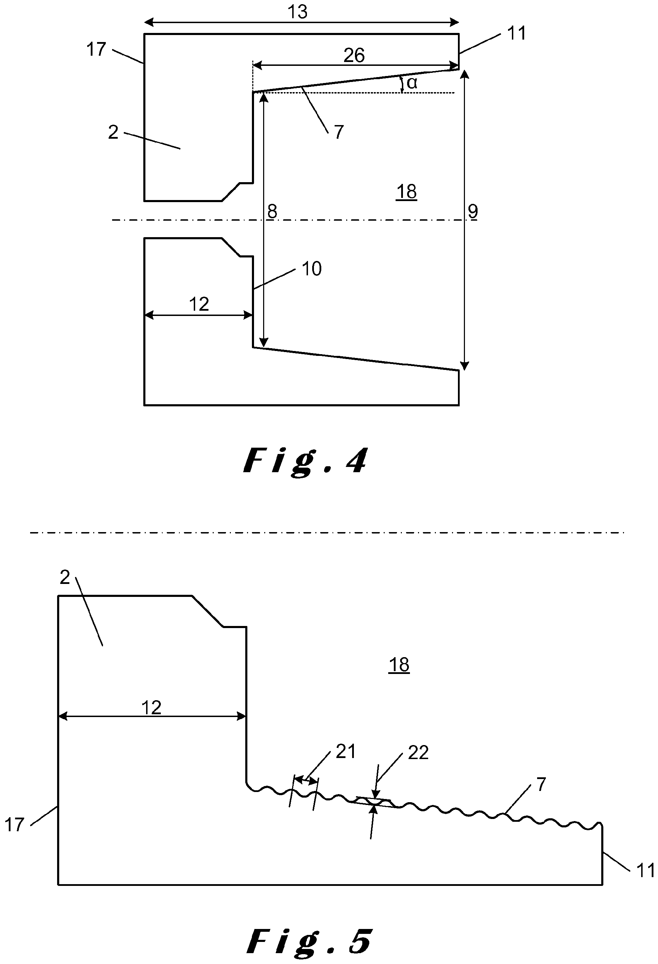

La figure 4 montre une vue rapprochée en coupe de la pièce évidée 2 comprise dans le dispositif 20. L'épaisseur 13 de la pièce évidée 2 est l'épaisseur comprise entre la paroi avant 11 et la paroi arrière externe percée 17. L'épaisseur 13 est préférentiellement comprise entre 40 mm et 100 mm, plus préférentiellement entre 55mm et 80 mm et est de préférence de 65 mm. La profondeur 26 de la cavité 18 est définie par la dimension comprise entre la paroi avant 11 et la paroi interne percée 10. La profondeur 26 de la cavité 18 de la pièce évidée 2 est préférentiellement comprise entre 10 mm et 80 mm, plus préférentiellement entre 20 mm et 60 mm et est de préférence de 34 mm. L'angle α qui correspond à l'angle décrit entre la normale à la paroi interne percée 10 et à la paroi interne latérale 7 de la cavité 18 est compris entre 2,5° et 15° et est de préférence de 10°. Le diamètre 8 de la cavité 18 au niveau de la paroi interne percée 10 est préférentiellement compris entre 50 mm et 70 mm, plus préférentiellement entre 60 mm et 68 mm et est de préférence de 66 mm. L'ouverture 9 de la cavité 18 au niveau de la paroi avant 11 est préférentiellement décrit par un diamètre dont la dimension est comprise de préférence entre 70 mm et 100 mm, plus préférentiellement entre 72 mm et 85 mm et vaut de manière encore plus préférée 78 mm. Le diamètre de l'orifice 19 est compris de préférence entre 5 mm et 30 mm, plus préférentiellement entre 10 mm et 20 mm et vaut de manière encore plus préférée 15 mm. La surface de l'orifice est de préférence taraudée afin de pouvoir recevoir un élément de connexion fluidique et mécanique 14. Un diamètre intermédiaire entre le diamètre de l'orifice 19 et le diamètre de la cavité au niveau de la face intérieure est compris de préférence entre 20 mm et 40 mm et vaut de manière préférée 25 mm.

La figure 5 montre une vue rapprochée en coupe de la pièce évidée 2 comprise dans le dispositif 20. La paroi interne latérale 7 délimitant partiellement la cavité 18 comprise entre la paroi avant 11 et la paroi interne percée 10 est de préférence striée. La strie est de préférence obtenue à l'aide d'un outil à fileter Métrique à 60° au pas 21 compris de préférence entre 0,15 mm et 0,30 mm, et est compris préférentiellement entre 0,2 mm et 0,25 mm. L'outil à fileter métrique est de préférence incliné de 20° lors de l'usinage. La strie caractérisant la paroi interne latérale 7 à une profondeur de sillon préférentiellement compris entre 0,05 mm et 0,15 mm.

La présence d'une strie ou d'un sillon sur la paroi interne latérale 7 délimitant partiellement la cavité 18 permet un meilleur contact avec la paroi externe 24 de la portion 25 du connecteur 3 électrique. La relative souplesse du matériau présent à la surface externe 24 du connecteur 3 électrique comparée au matériau qui compose la pièce évidée du dispositif 20, permet au matériau de la surface 24 du connecteur de venir s'emboiter dans les sillons de la paroi interne latérale 7 de la cavité 18 lors de leur contact. La surface externe 24 du connecteur forme une connexion étanche avec la cavité 18 et plus précisément avec la paroi interne latérale 7. L'actionnement du contrôleur de flux d'air comprimé 1 qui permet de faire passer un filet d'air entre le bouchon conique 4 et la paroi interne du connecteur 3 électrique fait gonfler la surface externe 24 du connecteur ce qui vient la plaquer aux sillons de la paroi interne latérale 7. Ainsi un contact étanche entre la paroi interne latérale 7 et la surface externe 24 est maintenu lors de l'activation du flux d'air. Un contact étanche entre la paroi interne latérale 7 et la surface externe 24 permet une connexion fluidique entre celles-ci.

La présente invention a été décrite en relation avec des modes de réalisations spécifiques, qui ont une valeur purement illustrative et ne doivent pas être considérés comme limitatifs. D'une manière générale, la présente invention n'est pas limitée aux exemples illustrés et/ou décrits ci-dessus. L'usage des verbes « comprendre », « inclure », « comporter », ou toute autre variante, ainsi que leurs conjugaisons, ne peut en aucune façon exclure la présence d'éléments autres que ceux mentionnés. L'usage de l'article indéfini « un », « une », ou de l'article défini « le », « la » ou « l' », pour introduire un élément n'exclut pas la présence d'une pluralité de ces éléments. Les numéros de référence dans les revendications ne limitent pas leur portée.

## Revendications

1. Méthode pour faciliter le placement d'une pièce à fiche conique (5) apte à être connectée électriquement à un poste électrique à l'intérieur d'un connecteur (3) électrique comprenant :
- une première portion comprenant une première ouverture pour recevoir ladite pièce à fiche conique (5),
- une deuxième portion (25) comprenant une deuxième ouverture pour recevoir un bouchon conique (4),
ladite méthode comprenant les étapes suivantes :
- fournir un dispositif (20) comprenant :
- une source d'air comprimé (16) ;
- un contrôleur de flux d'air comprimé (1) ;
- une connexion fluidique (23) couplée de manière fluidique entre ladite source d'air comprimé (16) et ledit contrôleur de flux d'air comprimé (1) ;
- une pièce évidée (2) comprenant :
∘ une cavité (18) :
▪ débouchant sur une ouverture (9),
▪ limitée d'un côté opposé à ladite ouverture (9) par une paroi interne percée (10) de ladite pièce évidée (2),
▪ limitée latéralement par une paroi interne latérale (7) comprise entre la paroi interne percée (10) et ladite ouverture (9), la paroi interne latérale (7) a la forme d'un cône ayant un angle de cône (a) compris entre 2.5° et 15°, l'angle de cône (a) étant l'angle entre la normale à la paroi interne percée (10) et la paroi interne latérale (7) de la cavité (18),
∘ une paroi arrière externe percée (17) opposée à ladite ouverture (9) ;
∘ un orifice (19) traversant entre ladite paroi arrière externe percée (17) et ladite paroi interne percée (10) pour amener de l'air dans ladite cavité (18) ;
ladite pièce évidée (2) étant configurée pour recevoir dans ladite cavité (18) ladite deuxième portion (25) dudit connecteur (3) via ladite ouverture (9) et former entre ladite paroi interne latérale (7) et une paroi externe (24) de ladite deuxième portion (25) une connexion étanche ;
- un moyen de connexion (14) pour relier de manière fluidique le contrôleur de flux d'air comprimé (1) et ladite cavité (18) via ledit orifice (19) ;
- insérer ladite pièce (5) à l'intérieur de ladite première ouverture dudit connecteur (3) électrique ;
- insérer ladite deuxième portion (25) dudit connecteur (3) dans la cavité (18) dudit dispositif (20) via son ouverture (9) pour former une connexion étanche entre une paroi externe (24) de ladite deuxième portion (25) et la paroi interne latérale (7) de la pièce évidée (2) du dispositif (20) ;
- appliquer une surpression dans ladite cavité (18) de la pièce évidée (2) du dispositif (20) via le contrôleur de flux d'air comprimé (1) connecté de manière fluidique à ladite cavité (18) par l'intermédiaire dudit moyen de connexion (14) pour permettre un écoulement d'un flux d'air entre une paroi interne (27) dudit connecteur (3) et ladite pièce (5).

2. Méthode pour faciliter le placement d'une pièce à fiche conique (5) à l'intérieur d'un connecteur (3) électrique selon la revendication précédente et comprenant l'étape additionnelle suivante :
- pousser ladite pièce (5) dans ledit connecteur (3) électrique pendant l'application d'une surpression dans ladite cavité (18).

3. Méthode pour faciliter le placement d'une pièce à fiche conique (5) à l'intérieur d'un connecteur (3) électrique selon l'une quelconque des revendications précédentes et comprenant l'étape additionnelle suivante :
- pousser ladite pièce à fiche conique (5) dans ledit connecteur (3) électrique après l'application d'une surpression dans ladite cavité (18).

4. Méthode pour faciliter le placement d'une pièce à fiche conique (5) à l'intérieur d'un connecteur (3) électrique selon l'une quelconque des revendications précédentes **caractérisée en ce qu'**elle comprend l'étape additionnelle suivante :
- appliquer de la graisse à l'intérieur dudit connecteur (3) à un emplacement destiné à recevoir ladite pièce (4 ; 5) avant d'insérer ladite pièce (4, 5) dans ledit connecteur (3).

5. Méthode pour faciliter le placement d'une pièce à fiche conique (5) à l'intérieur d'un connecteur (3) électrique selon l'une quelconque des revendications précédentes **caractérisée en ce qu'**elle comprend l'étape additionnelle suivante :
- déposer de la graisse sur une surface conique de la pièce à fiche conique (5) avant d'insérer ladite pièce (5) dans ledit connecteur (3).

6. Méthode pour faciliter le retrait d'une pièce (4 ; 5) de l'intérieur d'un connecteur (3) électrique comprenant :
- une première portion comprenant une première ouverture pour recevoir une pièce à fiche conique (5),
- une deuxième portion (25) comprenant une deuxième ouverture pour recevoir un bouchon conique (4) ;
ladite méthode comprenant les étapes suivantes :
- fournir un dispositif (20) comprenant :
- une source d'air comprimé (16) ;
- un contrôleur de flux d'air comprimé (1) ;
- une connexion fluidique (23) couplée de manière fluidique entre ladite source d'air comprimé (16) et ledit contrôleur de flux d'air comprimé (1) ;
- une pièce évidée (2) rigide comprenant :
∘ une cavité (18) :
▪ débouchant sur une ouverture (9),
▪ limitée d'un côté opposé à ladite ouverture (9) par une paroi interne percée (10) de ladite pièce évidée (2),
▪ limitée latéralement par une paroi interne latérale (7) comprise entre la paroi interne percée (10) et ladite ouverture (9), la paroi interne latérale (7) a la forme d'un cône ayant un angle de cône (a) compris entre 2.5° et 15°, l'angle de cône (a) étant l'angle entre la normale à la paroi interne percée (10) et la paroi interne latérale (7) de la cavité (18),
∘ une paroi arrière externe percée (17) opposée à ladite ouverture (9) ;
∘ un orifice (19) traversant entre ladite paroi arrière externe percée (17) et ladite paroi interne percée (10) pour amener de l'air dans ladite cavité (18) ;
ladite pièce évidée (2) étant configurée pour recevoir dans ladite cavité (18) ladite deuxième portion (25) dudit connecteur (3) via ladite ouverture (9) et former entre ladite paroi interne latérale (7) et une paroi externe (24) souple de ladite deuxième portion (25) une connexion étanche ;
- un moyen de connexion (14) pour relier de manière fluidique le contrôleur de flux d'air comprimé (1) et ladite cavité (18) via ledit orifice (19) ;
- insérer ladite deuxième portion (25) dudit connecteur (3) électrique dans la cavité (18) de la pièce évidée (2) dudit dispositif (20) via son ouverture (9) pour former une connexion étanche entre une paroi externe (24) de ladite deuxième portion (25) dudit connecteur (3) électrique et la paroi interne latérale (7) de la pièce évidée (2) dudit dispositif (20) ;
- appliquer une surpression dans ladite cavité (18) via le contrôleur de flux d'air comprimé (1) connecté de manière fluidique à ladite cavité (18) par l'intermédiaire du moyen de connexion (14) dudit dispositif (20) pour permettre un écoulement d'un flux d'air comprimé entre une paroi interne (27) dudit connecteur (3) et ladite pièce (4 ; 5).

7. Méthode pour faciliter le retrait d'une pièce (4 ; 5) de l'intérieur d'un connecteur (3) électrique selon la revendication précédente **caractérisée en ce qu'**elle comprend l'étape additionnelle suivante :
- appliquer une surpression additionnelle comprise entre 1 x 10⁴ Pa et 6 x 10⁵ Pa après l'application de la première surpression.

8. Méthode pour faciliter le retrait d'une pièce (4 ; 5) de l'intérieur d'un connecteur (3) électrique selon l'une quelconque des deux revendications précédentes **caractérisée en ce que** ladite pièce est un bouchon (4) conique qui dispose d'une interface pour interagir avec un outil de serrage.

9. Méthode selon la revendication précédente **caractérisée en ce qu'**un dépôt de graisse est effectué autour du bouchon (4) conique avant l'application d'une surpression dans ladite cavité (18).

10. Méthode selon l'une quelconque des deux revendications précédentes **caractérisée en ce que** le bouchon (4) conique est dévissé du connecteur (3) électrique après l'application de la surpression dans ladite cavité (18).

11. Méthode selon la revendication précédente **caractérisée en ce que** ledit bouchon (4) conique est extrait dudit connecteur (3) après le dévissage dudit bouchon (4) conique.

12. Méthode pour faciliter le retrait d'une pièce (4; 5) de l'intérieur d'un connecteur (3) électrique selon l'une quelconque des revendications 7 à 8 **caractérisée en ce que** ladite pièce est une pièce à fiche (5) conique qui est connectée électriquement et mécaniquement à un poste électrique.

13. Méthode selon la revendication précédente **caractérisée en ce que** ledit connecteur (3) est retiré de ladite pièce à fiche (5) conique pendant l'application d'une surpression dans ladite cavité (18).

14. Système pour le placement d'une pièce (4 ; 5) à l'intérieur d'un connecteur (3) électrique et son retrait comprenant :
- ledit connecteur (3) électrique comprenant
∘ une première portion comprenant une première ouverture pour recevoir une pièce à fiche conique (5),
∘ une deuxième portion (25) comprenant une deuxième ouverture pour recevoir un bouchon conique (4) ;
- ladite pièce (4 ; 5) apte à être insérée dans ladite première ou deuxième ouverture dudit connecteur (3) électrique ;
- un dispositif (20) pour faciliter le placement de ladite pièce (4 ; 5) à l'intérieur dudit connecteur (3) électrique et son retrait, ledit dispositif (20) comprenant :
- une source d'air comprimé (16) ;
- un contrôleur de flux d'air comprimé (1) ;
- une connexion fluidique (23) couplée de manière fluidique entre ladite source d'air comprimé (16) et ledit contrôleur de flux d'air comprimé (1) ;
**caractérisé en ce que** ledit dispositif (20) comprend en outre :
- une pièce évidée (2) rigide comprenant :
∘ une cavité (18) :
▪ débouchant sur une ouverture (9),
▪ limitée d'un côté opposé à ladite ouverture (9) par une paroi interne percée (10) de ladite pièce évidée (2),
▪ limitée latéralement par une paroi interne latérale (7) comprise entre la paroi interne percée (10) et ladite ouverture (9), la paroi interne latérale (7) a la forme d'un cône ayant un angle de cône (a) compris entre 2.5° et 15°, l'angle de cône (a) étant l'angle entre la normale à la paroi interne percée (10) et la paroi interne latérale (7) de la cavité (18),
∘ une paroi arrière externe percée (17) opposée à ladite ouverture (9) ;
∘ un orifice (19) traversant entre ladite paroi arrière externe percée (17) et ladite paroi interne percée (10) pour amener de l'air dans ladite cavité (18) ;
ladite pièce évidée (2) étant configurée pour recevoir dans ladite cavité (18) ladite deuxième portion (25) dudit connecteur (3) via ladite ouverture (9) et former entre ladite paroi interne latérale (7) et une paroi externe (24) souple de ladite deuxième portion (25) une connexion étanche de sorte qu'une surpression d'air comprimé dans ladite cavité (18) engendre un écoulement d'un flux d'air comprimé entre une paroi interne (27) dudit connecteur (3) et ladite pièce (4 ; 5).

## Patentansprüche

1. Verfahren zum vereinfachten Anbringen eines konischen Steckteils (5), das geeignet ist, elektrisch an eine Schaltanlage im Inneren eines elektrischen Verbinders (3) angeschlossen zu werden, umfassend:
- einen ersten Abschnitt mit einer ersten Öffnung zur Aufnahme des konischen Steckteils (5),
- einen zweiten Abschnitt (25) mit einer zweiten Öffnung zur Aufnahme eines konischen Stopfens (4),
wobei das Verfahren die folgenden Schritte umfasst:
- Bereitstellen einer Vorrichtung (20) umfassend:
- eine Druckluftquelle (16);
- einen Druckluft-Durchflussregler (1);
- eine Fluidverbindung (23), die fluidtechnisch zwischen der Druckluftquelle (16) und dem Druckluft-Durchflussregler (1) gekoppelt ist;
- ein Aussparungsteil (2) umfassend:
∘ einen Hohlraum (18):
▪ der in eine Öffnung (9) mündet,
▪ der auf einer der Öffnung (9) gegenüberliegenden Seite durch eine durchbrochene Innenwand (10) des Aussparungsteils (2) begrenzt ist,
▪ der seitlich durch eine seitliche Innenwand (7) begrenzt ist, die zwischen der durchbrochenen Innenwand (10) und der Öffnung (9) liegt, wobei die seitliche Innenwand (7) die Form eines Konus mit einem Konuswinkel (a) zwischen 2,5° und 15° aufweist, wobei der Konuswinkel (a) dem Winkel zwischen der Normalen zur durchbrochenen Innenwand (10) und der seitlichen Innenwand (7) des Hohlraums (18) entspricht,
∘ eine durchbrochene äußere Rückwand (17), die der Öffnung (9) gegenüberliegt;
∘ eine Durchgangsöffnung (19) zwischen der durchbrochenen äußeren Rückwand (17) und der durchbrochenen Innenwand (10) zum Zuführen von Luft in den Hohlraum (18);
wobei das Aussparungsteil (2) so konfiguriert ist, dass es in dem Hohlraum (18) den zweiten Abschnitt (25) des Verbinders (3) über die Öffnung (9) aufnimmt und zwischen der seitlichen Innenwand (7) und einer Außenwand (24) des zweiten Abschnitts (25) eine dicht schließende Verbindung bildet;
- ein Verbindungsmittel (14) zum fluidtechnischen Verbinden des Druckluft-Durchflussreglers (1) und des Hohlraums (18) über die Öffnung (19);
- Einführen des Teils (5) in die erste Öffnung des elektrischen Verbinders (3);
- Einführen des zweiten Abschnitts (25) des Verbinders (3) in den Hohlraum (18) der Vorrichtung (20) über seine Öffnung (9), um eine dicht schließende Verbindung zwischen einer Außenwand (24) des zweiten Abschnitts (25) und der seitlichen Innenwand (7) des Aussparungsteils (2) der Vorrichtung (20) herzustellen;
- Anlegen eines Überdrucks in dem Hohlraum (18) des Aussparungsteils (2) der Vorrichtung (20) über den Druckluft-Durchflussregler (1), der fluidtechnisch mit dem Hohlraum (18) durch das Verbindungsmittel (14) verbunden ist, um ein Durchströmen von Luft zwischen einer Innenwand (27) des Verbinders (3) und dem Teil (5) zu ermöglichen.

2. Verfahren zum vereinfachten Anbringen eines konischen Steckteils (5) im Inneren eines elektrischen Verbinders (3) nach dem vorstehenden Anspruch, das den folgenden zusätzlichen Schritt umfasst:
- Einschieben des Teils (5) in den elektrischen Verbinder (3) bei gleichzeitigem Anlegen eines Überdrucks in dem Hohlraum (18).

3. Verfahren zum vereinfachten Anbringen eines konischen Steckteils (5) im Inneren eines elektrischen Verbinders (3) nach einem der vorstehenden Ansprüche, das den folgenden zusätzlichen Schritt umfasst:
- Einschieben des konischen Steckteils (5) in den elektrischen Verbinder (3) nach dem Anlegen eines Überdrucks in dem Hohlraum (18).

4. Verfahren zum vereinfachten Anbringen eines konischen Steckteils (5) im Inneren eines elektrischen Verbinders (3) nach einem der vorstehenden Ansprüche, **dadurch gekennzeichnet, dass** es den folgenden zusätzlichen Schritt umfasst:
- Auftragen von Schmierfett im Inneren des Verbinders (3) an einer Stelle zur Aufnahme des Teils (4; 5) vor dem Einführen des Teils (4, 5) in den Verbinder (3).

5. Verfahren zum vereinfachten Anbringen eines konischen Steckteils (5) im Inneren eines elektrischen Verbinders (3) nach einem der vorstehenden Ansprüche, **dadurch gekennzeichnet, dass** es den folgenden zusätzlichen Schritt umfasst:
- Auftragen von Schmierfett auf eine konische Oberfläche des konischen Steckteils (5) vor dem Einführen des Teils (5) in den Verbinder (3).

6. Verfahren zum vereinfachten Entfernen eines Teils (4; 5) aus dem Inneren eines elektrischen Verbinders (3), umfassend:
- einen ersten Abschnitt mit einer ersten Öffnung zur Aufnahme eines konischen Steckteils (5),
- einen zweiten Abschnitt (25) mit einer zweiten Öffnung zur Aufnahme eines konischen Stopfens (4);
wobei das Verfahren die folgenden Schritte umfasst:
- Bereitstellen einer Vorrichtung (20) umfassend:
- eine Druckluftquelle (16);
- einen Druckluft-Durchflussregler (1);
- eine Fluidverbindung (23), die fluidtechnisch zwischen der Druckluftquelle (16) und dem Druckluft-Durchflussregler (1) gekoppelt ist;
- ein starres Aussparungsteil (2) umfassend:
∘ einen Hohlraum (18):
▪ der in eine Öffnung (9) mündet,
▪ der auf einer der Öffnung (9) gegenüberliegenden Seite durch eine durchbrochene Innenwand (10) des Aussparungsteils (2) begrenzt ist,
▪ der seitlich durch eine seitliche Innenwand (7) begrenzt ist, die zwischen der durchbrochenen Innenwand (10) und der Öffnung (9) liegt, wobei die seitliche Innenwand (7) die Form eines Konus mit einem Konuswinkel (a) zwischen 2,5° und 15° aufweist, wobei der Konuswinkel (a) dem Winkel zwischen der Normalen zur durchbrochenen Innenwand (10) und der seitlichen Innenwand (7) des Hohlraums (18) entspricht,
∘ eine durchbrochene äußere Rückwand (17), die der Öffnung (9) gegenüberliegt;
∘ eine Durchgangsöffnung (19) zwischen der durchbrochenen äußeren Rückwand (17) und der durchbrochenen Innenwand (10) zum Zuführen von Luft in den Hohlraum (18);
wobei das Aussparungsteil (2) so konfiguriert ist, dass es in dem Hohlraum (18) den zweiten Abschnitt (25) des Verbinders (3) über die Öffnung (9) aufnimmt und zwischen der seitlichen Innenwand (7) und einer flexiblen Außenwand (24) des zweiten Abschnitts (25) eine dicht schließende Verbindung bildet;
- ein Verbindungsmittel (14) zum fluidtechnischen Verbinden des Druckluft-Durchflussreglers (1) und des Hohlraums (18) über die Anschlussöffnung (19);
- Einfügen des zweiten Abschnitts (25) des elektrischen Verbinders (3) in den Hohlraum (18) des Aussparungsteils (2) der Vorrichtung (20) über seine Öffnung (9), um eine dicht schließende Verbindung zwischen einer Außenwand (24) des zweiten Abschnitts (25) des elektrischen Verbinders (3) und der seitlichen Innenwand (7) des Aussparungsteils (2) der Vorrichtung (20) herzustellen;
- Anlegen eines Überdrucks in dem Hohlraum (18) über den Druckluft-Durchflussregler (1), der fluidtechnisch mit dem Hohlraum (18) durch das Verbindungsmittel (14) der Vorrichtung (20) verbunden ist, um ein Durchströmen von Druckluft zwischen einer Innenwand (27) des Verbinders (3) und dem Teil (4; 5) zu ermöglichen.

7. Verfahren zum vereinfachten Entfernen eines Teils (4; 5) aus dem Inneren eines elektrischen Verbinders (3) nach dem vorstehenden Anspruch, **dadurch gekennzeichnet, dass** es den folgenden zusätzlichen Schritt umfasst:
- Anlegen eines zusätzlichen Überdrucks zwischen 1 x 10⁴ Pa und 6 x 10⁵ Pa nach Anlegen des ersten Überdrucks.

8. Verfahren zum vereinfachten Entfernen eines Teils (4; 5) aus dem Inneren eines elektrischen Verbinders (3) nach einem der beiden vorstehenden Ansprüche, **dadurch gekennzeichnet, dass** das Teil ein konischer Stopfen (4) ist, der eine Schnittstelle zum Zusammenwirken mit einem Klemmwerkzeug aufweist.

9. Verfahren nach dem vorstehenden Anspruch, **dadurch gekennzeichnet, dass** vor dem Anlegen eines Überdrucks in dem Hohlraum (18) Schmierfett um den konischen Stopfen (4) aufgetragen wird.

10. Verfahren nach einem der beiden vorstehenden Ansprüche, **dadurch gekennzeichnet, dass** der konische Stopfen (4) nach dem Anlegen des Überdrucks in dem Hohlraum (18) von dem elektrischen Verbinder (3) abgeschraubt wird.

11. Verfahren nach dem vorstehenden Anspruch, **dadurch gekennzeichnet, dass** der konische Stopfen (4) nach dem Abschrauben des konischen Stopfens (4) aus dem Verbinder (3) herausgezogen wird.

12. Verfahren zum vereinfachten Entfernen eines Teils (4; 5) aus dem Inneren eines elektrischen Verbinders (3) nach einem der Ansprüche 7 bis 8, **dadurch gekennzeichnet, dass** das Teil ein konisches Steckteil (5) ist, das elektrisch und mechanisch mit einer Schaltanlage verbunden ist.

13. Verfahren nach dem vorstehenden Anspruch, **dadurch gekennzeichnet, dass** der Verbinder (3) während des Anlegens eines Überdrucks in dem Hohlraum (18) von dem konischen Steckteil (5) entfernt wird.

14. System zum Anbringen eines Teils (4; 5) im Inneren eines elektrischen Verbinders (3) und zum Entfernen desselben, umfassend:
- den elektrischen (3) Verbinder umfassend
∘ einen ersten Abschnitt mit einer ersten Öffnung zur Aufnahme eines konischen Steckteils (5),
∘ einen zweiten Abschnitt (25) mit einer zweiten Öffnung zur Aufnahme eines konischen Stopfens (4);
- das Teil (4; 5), das geeignet ist, in die erste oder zweite Öffnung des elektrischen Verbinders (3) eingeführt zu werden;
- eine Vorrichtung (20) zum vereinfachten Anbringen des Teils (4; 5) im Inneren des elektrischen Verbinders (3) und zum vereinfachten Entfernen desselben, wobei die Vorrichtung (20) umfasst:
- eine Druckluftquelle (16);
- einen Druckluft-Durchflussregler (1);
- eine Fluidverbindung (23), die fluidtechnisch zwischen der Druckluftquelle (16) und dem Druckluft-Durchflussregler (1) gekoppelt ist;
**dadurch gekennzeichnet, dass** die Vorrichtung (20) ferner umfasst:
- ein starres Aussparungsteil (2) umfassend:
∘ einen Hohlraum (18):
▪ der in eine Öffnung (9) mündet,
▪ der auf einer der Öffnung (9) gegenüberliegenden Seite durch eine durchbrochene Innenwand (10) des Aussparungsteils (2) begrenzt ist,
▪ der seitlich durch eine seitliche Innenwand (7) begrenzt ist, die zwischen der durchbrochenen Innenwand (10) und der Öffnung (9) liegt, wobei die seitliche Innenwand (7) die Form eines Konus mit einem Konuswinkel (a) zwischen 2.5° und 15° aufweist, wobei der Konuswinkel (a) dem Winkel zwischen der Normalen zur durchbrochenen Innenwand (10) und der seitlichen Innenwand (7) des Hohlraums (18) entspricht,
∘ eine durchbrochene äußere Rückwand (17), die der Öffnung (9) gegenüberliegt;
∘ eine Durchgangsöffnung (19) zwischen der durchbrochenen äußeren Rückwand (17) und der durchbrochenen Innenwand (10) zum Zuführen von Luft in den Hohlraum (18);
wobei das Aussparungsteil (2) so konfiguriert ist, dass es in dem Hohlraum (18) den zweiten Abschnitt (25) des Verbinders (3) über die Öffnung (9) aufnimmt und zwischen der seitlichen Innenwand (7) und einer flexiblen Außenwand (24) des zweiten Abschnitts (25) eine dicht schließende Verbindung bildet, so dass ein Überdruck von Druckluft in dem Hohlraum (18) ein Durchströmen von Druckluft zwischen einer Innenwand (27) des Verbinders (3) und dem Teil (4; 5) erzeugt.

## Claims

1. Method for facilitating the placement of a conic sheet workpiece (5) capable of being electrically connected to an electrical substation inside an electrical connector (3) comprising:
- a first portion comprising a first opening to receive said conic sheet workpiece (5),
- a second portion (25) comprising a second opening to receive a conic stopper (4),
said method comprising the following steps:
- providing a device (20) comprising:
- a compressed air source (16);
- a compressed air flow controller (1);
- a fluid connection (23) fluidically coupled between said compressed air source (16) and said compressed air flow controller (1);
- a cored workpiece (2) comprising:
∘ a cavity (18):
▪ leading to an opening (9),
▪ limited on a side opposite said opening (9) by a borne internal wall (10) of said cored workpiece (2),
▪ laterally limited by a lateral internal wall (7) comprised between the borne internal wall (10) and said opening (9), the lateral internal wall (7) has the shape of a cone having a cone angle (α) comprised between 2.5° and 15°, the cone angle (α) being the angle between the normal to the borne internal wall (10) and the lateral internal wall (7) of the cavity (18),
∘ a borne external rear wall (17) opposite said opening (9);
∘ an orifice (19) passing through between said borne external rear wall (17) and said borne internal wall (10) to bring air into said cavity (18);
said cored workpiece (2) being configured to receive in said cavity (18), said second portion (25) of said connector (3) via said opening (9) and to form between said lateral internal wall (7) and an external wall (24) of said second portion (25), a sealed connection;
- a connection means (14) for fluidically connecting the controller of the compressed air flow (1) and said cavity (18) via said orifice (19);
- inserting said workpiece (5) inside said first opening of said electrical connector (3);
- inserting said second portion (25) of said connector (3) in the cavity (18) of said device (20) via its opening (9) to form a sealed connection between an external wall (24) of said second portion (25) and the lateral internal wall (7) of the cored workpiece (2) of the device (20);
- applying an overpressurisation in said cavity (18) of the cored workpiece (2) of the device (20) via the compressed air flow controller (1) fluidically connected to said cavity (18) by way of said connection means (14) to allow a flowing of an air flow between an internal wall (27) of said connector (3) and said workpiece (5).

2. Method for facilitating the placement of a conic sheet workpiece (5) inside an electrical connector (3) according to the preceding claim and comprising the following additional step:
- pushing said workpiece (5) in said electrical connector (3) during the application of an overpressurisation in said cavity (18).

3. Method for facilitating the placement of a conic sheet workpiece (5) inside an electrical connector (3) according to any one of the preceding claims and comprising the following additional step:
- pushing said conic sheet workpiece (5) in said electrical connector (3) after the application of an overpressurisation in said cavity (18).

4. Method for facilitating the placement of a conic sheet workpiece (5) inside an electrical connector (3) according to any one of the preceding claims **characterised in that** it comprises the following additional step:
- applying grease inside said connector (3) at a placement intended to receive said workpiece (4; 5) before inserting said workpiece (4, 5) in said connector (3).

5. Method for facilitating the placement of a conic sheet workpiece (5) inside an electrical connector (3) according to any one of the preceding claims **characterised in that** it comprises the following additional step:
- depositing grease on a conic surface of the conic sheet workpiece (5) before inserting said workpiece (5) in said connector (3).

6. Method for facilitating the removal of a workpiece (4; 5) inside an electrical connector (3) comprising:
- a first portion comprising a first opening to receive a conic sheet workpiece (5),
- a second portion (25) comprising a second opening to receive a conic stopper (4);
said method comprising the following steps:
- providing a device (20) comprising:
- a compressed air source (16);
- a compressed air flow controller (1);
- a fluid connection (23) fluidically coupled between said compressed air source (16) and said compressed air flow controller (1);
- a cored workpiece (2) comprising:
∘ a cavity (18):
▪ leading to an opening (9),
▪ limited on a side opposite said opening (9) by a borne internal wall (10) of said cored workpiece (2),
▪ laterally limited by a lateral internal wall (7) comprised between the borne internal wall (10) and said opening (9), the lateral internal wall (7) has the shape of a cone having a cone angle (α) comprised between 2.5° and 15°, the cone angle (α) being the angle between the normal to the borne internal wall (10) and the lateral internal wall (7) of the cavity (18),
∘ a borne external rear wall (17) opposite said opening (9);
∘ an orifice (19) passing through between said borne external rear wall (17) and said borne internal wall (10) to bring air into said cavity (18);
said cored workpiece (2) being configured to receive in said cavity (18), said second portion (25) of said connector (3) via said opening (9) and to form between said lateral internal wall (7) and a flexible external wall (24) of said second portion (25), a sealed connection;
- a connection means (14) for fluidically connecting the controller of the compressed air flow (1) and said cavity (18) via said orifice (19);
- inserting said second portion (25) of said electrical connector (3) in the cavity (18) of the cored workpiece (2) of said device (20) via its opening (9) to form a sealed connection between an external wall (24) of said second portion (25) of said electrical connector (3) and the lateral internal wall (7) of the cored workpiece (2) of said device (20);
- applying an overpressurisation in said cavity (18) via the compressed air flow controller (1) fluidically connected to said cavity (18) by way of the connection means (14) of said device (20) to allow a flowing of a compressed air flow between an internal wall (27) of said connector (3) and said workpiece (4; 5).

7. Method for facilitating the removal of a workpiece (4; 5) inside an electrical connector (3) according to the preceding claim, **characterised in that** it comprises the following additional step:
- applying an additional overpressurisation comprised between 1 x 10⁴ Pa and 6 x 10⁵ Pa after the application of the first overpressurisation.

8. Method for facilitating the removal of a workpiece (4; 5) inside an electrical connector (3) according to any one of the two preceding claims, **characterised in that** said workpiece is a conic stopper (4) which has an interface to interact with a clamping tool.

9. Method according to the preceding claim, **characterised in that** a grease deposition is made around the conic stopper (4) before the application of an overpressurisation in said cavity (18).

10. Method according to any one of the two preceding claims, **characterised in that** the conic stopper (4) is unscrewed from the electrical connector (3) after the application of the overpressurisation in said cavity (18).

11. Method according to the preceding claim, **characterised in that** said conic stopper (4) is extracted from said connector (3) after the unscrewing of said conic stopper (4).

12. Method for facilitating the removal of a workpiece (4; 5) inside an electrical connector (3) according to any one of claims 7 to 8, **characterised in that** said workpiece is a conic sheet workpiece (5) which is electrically and mechanically connected to an electric substation.

13. Method according to the preceding claim, **characterised in that** said connector (3) is removed from said conic sheet workpiece (5) during the application of an overpressurisation in said cavity (18).

14. System for the placement of a workpiece (4; 5) inside an electrical connector (3) and its removal comprising:
- said electrical connector (3) comprising
∘ a first portion comprising a first opening to receive a conic sheet workpiece (5),
∘ a second portion (25) comprising a second opening to receive a conic stopper (4);
- said workpiece (4; 5) capable of being inserted in said first or second opening of said electrical connector (3);
- a device (20) for facilitating the placement of said workpiece (4; 5) inside said electrical connector (3) and its removal, said device (20) comprising:
- a compressed air source (16);
- a compressed air flow controller (1);
- a fluid connection (23) fluidically coupled between said compressed air source (16) and said compressed air flow controller (1);
**characterised in that** said device (20) further comprises:
- a rigid cored workpiece (2) comprising:
∘ a cavity (18):
▪ leading to an opening (9),
▪ limited on a side opposite said opening (9) by a borne internal wall (10) of said cored workpiece (2),
▪ laterally limited by a lateral internal wall (7) comprised between the borne internal wall (10) and said opening (9), the lateral internal wall (7) has the shape of a cone having a cone angle (α) comprised between 2.5° and 15°, the cone angle (α) being the angle between the normal to the borne internal wall (10) and the lateral internal wall (7) of the cavity (18),
∘ a borne external rear wall (17) opposite said opening (9);
∘ an orifice (19) passing through between said borne external rear wall (17) and said borne internal wall (10) to bring air into said cavity (18);
said cored workpiece (2) being configured to receive in said cavity (18), said second portion (25) of said connector (3) via said opening (9) and to form between said lateral internal wall (7) and a flexible external wall (24) of said second portion (25), a sealed connection such that a compressed air overpressurisation in said cavity (18) causes a flowing of a compressed air flow between an internal wall (27) of said connector (3) and said workpiece (4; 5).
